Europäisches Patentamt

European Patent Office

Office européen des brevets

(19)

(11) Numéro de publication: **0 212 171**
**B1**

(12) **FASCICULE DE BREVET EUROPEEN**

(45) Date de publication du fascicule du brevet: **11.04.90**

(21) Numéro de dépôt: **86109047.0**

(22) Date de dépôt: **03.07.86**

(51) Int. Cl.⁵: **G 21 B 1/00**

(54) **Paroi de couverture de réacteur nucléaire à fusion contrôlée dans un plasma, et procédé de fabrication d'une telle paroi.**

<table>
<tr><td>

(30) Priorité: **05.07.85 FR 8510326**

(43) Date de publication de la demande:
**04.03.87 Bulletin 87/10**

(45) Mention de la délivrance du brevet:
**11.04.90 Bulletin 90/15**

(84) Etats contractants désignés:
**AT BE CH DE FR GB IT LI LU NL SE**

(56) Documents cités:
**EP-A-0 117 136**

**NUCLEAR TECHNOLOGY/FUSION, vol. 2, no. 4, octobre 1982, pages 712-722, ANS, Danville, Illinois, US; H.W. KUGEL et al.: "The design of the poloidal divertor experiment tokamak wall armor and inner limiter system"**

</td><td>

(73) Titulaire: **STEIN INDUSTRIE Société Anonyme dite:**
**19-21, avenue Morane Saulnier**
**F-78140 Vélizy Villacoublay (FR)**

(72) Inventeur: **Bonnand, Christian**
**12ter, rue de la Libération**
**F-59830 Bachy (FR)**
Inventeur: **Peyrelongue, Jean-Pierre**
**2 Square Francis Jammes**
**F-78760 Pontchartrain (FR)**

(74) Mandataire: **Weinmiller, Jürgen et al**
**Lennéstrasse 9 Postfach 24**
**D-8133 Feldafing (DE)**

</td></tr>
</table>

Courier Press, Leamington Spa, England.

EP 0 212 171 B1

## Description

La présente invention concerne une paroi de couverture de réacteur nucléaire à fusion contrôlée dans un plasma, comprenant une couche d'érosion en vis-à-vis de la chambre contenant le plasma, une barrière d'étanchéité, un circuit de refroidissement par l'eau sous pression et des collecteurs d'amenée et d'évacuation de l'eau de refroidissement. Elle s'étend en outre à un procédé de fabrication d'une telle paroi.

La couverture en cause est disposée dans la chambre à vide à l'intérieur de laquelle est confiné le plasma. Elle est constituée par un flux d'un matériau tel qu'un composé contenant du lithium, permettant d'assurer par régénération sous l'effet du flux neutronique le renouvellement du tritium consommé par les réactions de fusion nucléaire engendrées dans le plasma.

Cette couverture doit être isolée du plasma dont le rayonnement calorifique et l'action érosive détruiraient les dispositifs dans lesquels circule le matériau de régénération du tritium, les fuites de ces dispositifs pouvant réagir avec le plasma et le polluer.

L'isolement de cette couverture doit être assuré par une paroi dont la forme corresponde à l'enveloppe du volume du confinement magnétique du plasma dans la chambre à vide. Cette paroi doit assurer les fonctions suivantes:

protection de la couverture contre l'érosion par le plasma,

refroidissement des structures porteuses des éléments de la couverture fertile.

Elle doit également assurer pour elle-même ces deux fonctions de protection et de refroidissement.

Si cette paroi est intégrée dans la couverture, elle doit de plus jouer un rôle de barrière d'étanchéité pour le confinement des fuites éventuelles du fluide de refroidissement et du matériau fertile, pour maintenir le vide et la pureté requis dans la chambre à vide.

Il est très généralement admis que la couverture de ces réacteurs doit être fractionnée en secteurs amovibles pour permettre d'assurer le remplacement facile de pièces défectueuses. Chacun de ces secteurs doit être constitué d'une enveloppe étanche renfermant les dispositifs de régénération du tritium et de refroidissement, ainsi que des tubulures de liaison de ceux-ci avec l'extérieur de la chambre à vide. De ce fait, la paroi est alors également fractionnée et intégrée à la partie extérieure de chaque secteur de couverture, du côté de la chambre contenant le plasma.

Cette paroi doit comporter en premier lieu en regard de la chambre à vide une couche d'érosion d'une épaisseur suffisante pour résister sur une longue durée, de l'ordre de plusieurs années, à son érosion progressive inévitable par le plasma. Cette couche peut être obtenue par une surépaisseur de la paroi. Mais comme elle est difficile à refroidir, il y a lieu de limiter les contraintes dues aux dilatations différentielles dans l'épaisseur de la paroi et d'éviter les fissurétions sous contraintes de la zone formant barrière d'étanchéité. On peut à cet effet utiliser un métal massif, mais bon conducteur de la chaleur, tel qu'un acier martensitique. On peut également réaliser la couche d'érosion à l'aide de tuiles en matériau réfractaire tel qu'une céramique, à condition que la fixation de ces tuiles et le transfert de la chaleur vers le circuit de refroidissement soient assurés de façon parfaitement fiable pour éviter le détachement du matériau réfractaire, qui entraînerait la destruction précoce de la paroi.

On peut enfin réaliser la couche d'érosion en un métal relativement mauvais conducteur, tel qu'un acier austénitique. Mais il convient alors de la fractionner par un réseau serré de rainures limitant les dilatations différentielles. Ces rainures doivent présenter une forme appropriée en fond de gorge pour éviter les effets d'entaille, qui pourraient engendrer des fissures dans la barrière d'étanchéité sous-jacente. L'usinage de telles rainures dans une paroi massive serait cependant extrêmement coûteux.

La barrière d'étanchéité peut être constituée, soit par la base massive de la couche d'érosion, soit par une plaque support des tuiles en matériau réfractaire.

Derrière la barrière d'étanchéité, la paroi comporte alors un circuit de refroidissement assurant l'évacuation de la chaleur engendrée par le plasma, ce circuit devant s'étendre sur toute la surface de la paroi. Le fluide de refroidissement peut être l'hélium, un métal ou alliage métallique liquide ou de l'eau sous pression. Ce circuit doit présenter une grande fiabilité à l'encontre de fuites éventuelles du fluide de refroidissement, qui pourraient mettre hors service le secteur de couverture correspondant et produire une pollution du plasma.

Le refroidissement par de l'eau sous pression présente un grand intérêt, du fait que cette eau réchauffée peut céder sa chaleur à un autre fluide soumis à un cycle de production d'énergie. Mais il exige une très bonne étanchéité du circuit. Si la paroi est constituée à partir d'une pièce unique, il est nécessaire de réaliser de nombreuses soudures pour créer et raccorder les canaux de refroidissement, et donc de prévoir un circuit entièrement à double enveloppe dans le secteur de couverture, de fabrication difficile et coûteuse.

La présente invention a pour but de procurer une paroi de couverture de réacteur nucléaire à fusion contrôlée, comportant une couche d'érosion, une barrière d'étanchéité et un circuit de refroidissement à eau sous pression, dont les éléments présentent les propriétés suivantes:

sa couche d'érosion est rainurée, mais de fabrication facile et présente un faible effet d'entaille. Elle s'étend sur la totalité de la surface de la paroi en vis-à-vis direct du plasma

son circuit de refroidissement est à simple enveloppe, et pris dans la masse même de la paroi de façon à diminuer la résistance thermique

son circuit de refroidissement est constitué de canaux résistant à la pression élevée de l'eau, et il ne présente aucune soudure au contact du plasma

sa réalisation est de forme modulaire, par assemblage d'éléments de petites dimensions réalisables en grande série

les collecteurs d'amenée et d'évacuation de l'eau de refroidissement sont très proches de la paroi.

La paroi selon l'invention est caractérisée en ce qu'elle est constituée par soudure côte à côte de profilés comprenant une couche d'érosion et une zone percée d'un conduit de section droite circulaire, et munis sur chacun de leurs côtés d'excroissances de forme permettant lors de l'assemblage des profilés, d'une part la formation dans la couche d'érosion de rainures longitudinales à fond arrondi, d'autre part le soudage des profilés entre eux.

Elle répond en outre de préférence à au moins l'une des caractéristiques suivantes:

les conduits sont exempts de soudure longitudinale, et ne comportent de soudures qu'à leurs extrémités, aux raccordements avec les collecteurs d'amenée et d'évacuation de l'eau de refroidissement.

Les profilés sont en outre munis de rainures transversales à leur longueur, ou obliques par rapport à celle-ci, obtenues par usinage.

Les extrémités des conduits des profilés sont munis de collerettes de raccordement aux collecteurs, et ceux-ci sont constitués de deux demi-coquilles dont l'une est munie par usinage de collerettes de raccordement par soudage à celles des extrémités des conduits.

Chaque jonction des collerettes de raccordement des extrémités des conduits et des collecteurs est doublée par un manchon interne soudé sur l'une et l'autre collerette.

Elle comporte un collecteur d'amenée de l'eau de refroidissement à une extrémité, et un collecteur d'évacuation de ce fluide à l'autre extrémité, et le pas de leurs perforations de raccordement aux conduits des profilés est égal à l'écartement des profilés.

Elle comporte un collecteur d'amenée de l'eau de refroidissement et un collecteur d'évacuation de cette eau à la même extrémité, le pas de leurs perforations de raccordement aux conduits des profilés est le double de l'écartement des profilés, et les orifices des extrémités des profilés non utilisés sont obturés par des bouchons soudés sur ces extrémités.

Les collecteurs d'amenée et d'évacuation de l'eau de refroidissement sont isolés de la chambre contenant le plasma par une enveloppe soudée sur l'extrémité de la couche d'érosion, qui ne comporte pas de rainure longitudinale.

Les collecteurs d'amenée et d'évacuation de l'eau de refroidissement sont disposés côte à côte derrière une extrémité des profilés.

Chaque profilé disposé dans un des angles de la paroi est relié en dérivation à un profilé adjacent lui-même relié aux collecteurs d'amenée et d'évacuation de l'eau de refroidissement.

Le procédé de fabrication selon l'invention d'une telle paroi est caractérisé en ce que l'on prépare par étirage et laminage des profilés de forme correspondant à la forme de la chambre à vide, comprenant chacun une couche d'érosion et une zone percée d'un conduit de section droite circulaire, munis sur chacun de leurs côtés d'excroissances permettant lors de leur assemblage, d'une part la formation dans la couche d'érosion de rainures longitudinales à fond arrondi, d'autre part le soudage des profilés entre eux, puis en ce que l'on effectue leur soudage côte à côte.

On effectue de préférence le soudage des profilés entre eux par bombardement électronique. Pour assurer le raccordement des profilés à au moins l'une de leurs extrémités à un collecteur d'amenée ou d'évacuation de l'eau de refroidissement, on prépare des profilés comportant à au moins l'une de leurs extrémités des collerettes de raccordement à un collecteur d'amenée ou d'évacuation de l'eau de refroidissement, l'on soude ces collerettes aux orifices des collecteurs, l'on introduit un manchon interne dans chaque collerette, et l'on soude ce manchon d'une part sur la collerette, d'autre part sur l'ouverture du collecteur.

Il est décrit ci-après, à titre d'exemple et en référence aux figures du dessin annexé, une paroi pour couverture de réacteur nucléaire selon l'invention.

La figure 1 représente schématiquement en coupe transversale un réacteur nucléaire à fusion.

La figure 2 représente en coupe l'assemblage côte à côte de trois profilés.

La figure 3 représente une coupe par l'axe III-III de la figure 2.

La figure 4 représente une coupe par l'axe IV-IV de la figure 2.

La figure 5 représente une vue en élévation de face selon la flèche V de la figure 2.

La figure 6 représente le raccordement de l'extrémité d'un profilé à un collecteur.

La figure 7 représente le raccordement latéral d'un profilé à un collecteur, l'ouverture d'extrémité du profilé étant obturée par un bouchon.

La figure 8 représente en perspective le raccordement d'un profilé à un collecteur et celui du profilé adjacent à un autre collecteur.

Les figures 9A et 9B représentent en perspective et en coupe la circulation de l'eau de refroidissement aux extrémités des profilés, dans le cas où les deux collecteurs débouchent sur la même extrémité des profilés (circulation en U de l'eau de refroidissement dans la paroi).

Les figures 10A et 10B représentent en perspective et en coupe, la circulation de l'eau de refroidissement lorsque l'on prolonge la couche d'érosion jusqu'à l'extrémité de l'enveloppe d'un secteur, en disposant les deux collecteurs côte à côte.

La figure 11 est une vue en coupe des profilés dans un angle d'un secteur de couverture, du côté de la face tournée vers la chambre à plasma et de la face perpendiculaire.

La figure 12 représente les mêmes profilés vus de dessus.

La figure 13 représente une coupe selon l'axe XIII-XIII de la figure 11.

La figure 14 représente dans un angle du secteur de couverture, la disposition des collecteurs des profilés, d'une part de la face tournée vers la chambre à plasma, d'autre part de la face perpendiculaire.

La figure 15 est une coupe agrandie selon l'axe XV-XV de lé figure 14.

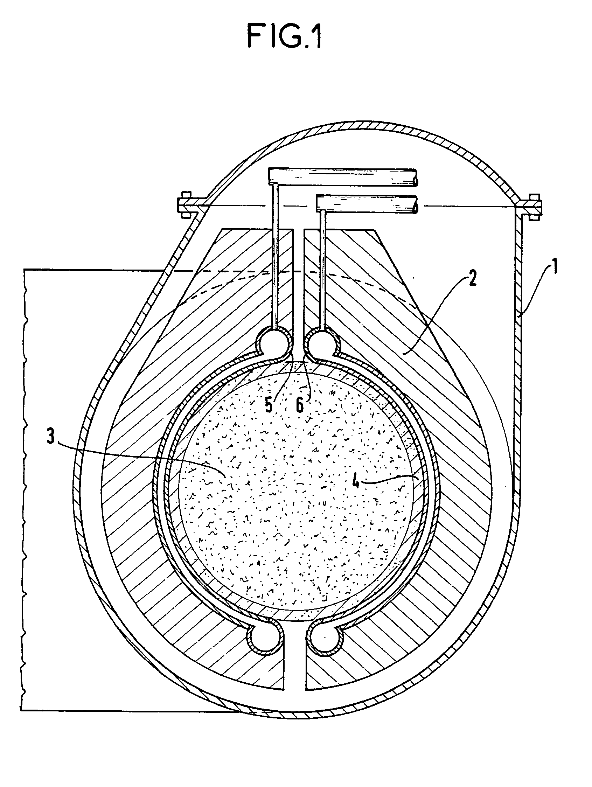

Dans la figure 1, le réacteur à fusion est contenu dans une enceinte sous vide 1. Il comporte des secteurs de couverture tels que 2, autour de la chambre à plasma 3. Celle-ci est entourée de la paroi de couverture 4. Des collecteurs d'eau de refroidissement 5 et 6 assurent l'amenée et l'évacuation de celle-ci.

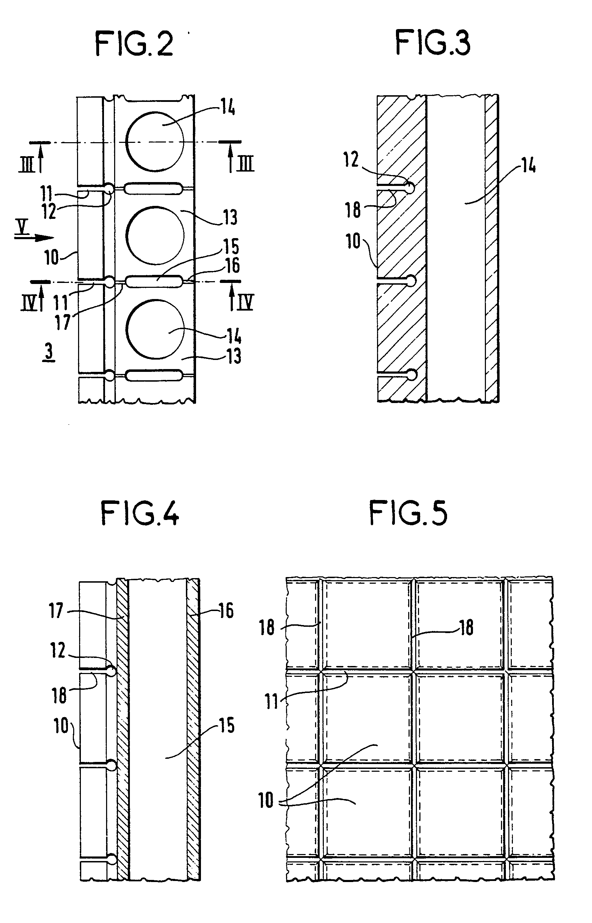

Dans les figures 2 à 5, l'élément de paroi représenté développé comporte une couche d'érosion 10 munie de rainures longitudinales 11 présentant un fond circulaire 12 destiné à éviter l'apparition de fissurations dans la barrière d'étanchéité formée par l'assemblage des profilés tels que 13, percés de conduits longitudinaux de section droite circulaire 14.

La face latérale 15 des profilés comporte des excroissances 16 et 17 permettant le soudage des profilés côte à côte. Le profil de ces excroissances est tel qu'il permet d'effectuer la soudure des deux excroissances en une seule passe de bombardement électronique.

Les profilés sont munis par ailleurs de rainures transversales 18, permettant en conjonction avec les rainures 11 séparant les profilés adjacents de former un pavage d'éléments parallélépipédiques limitant les dilatations différentielles.

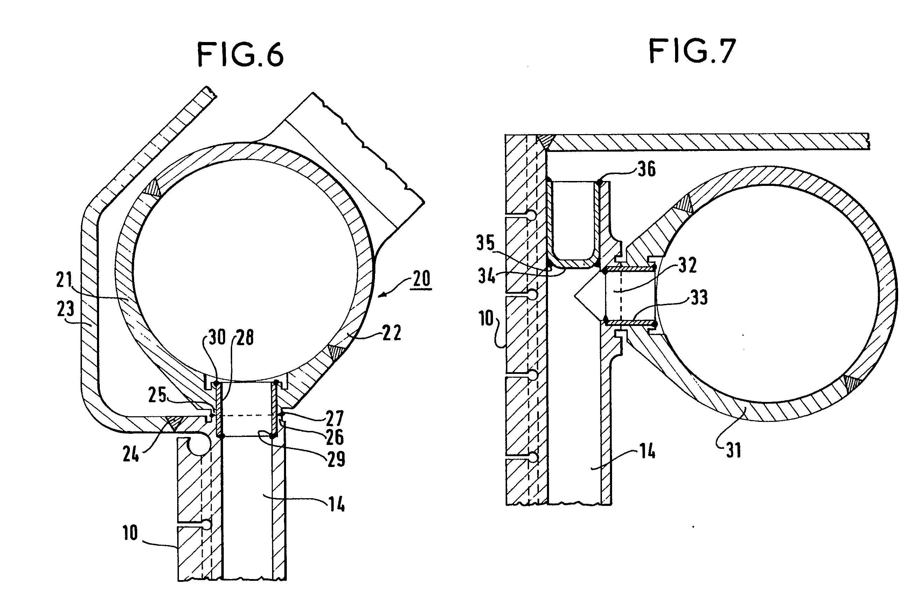

Dans la figure 6, le conduit 14 d'un profilé débouche dans un collecteur d'amenée ou d'évacuation d'eau 20, formé de deux demi-coquilles soudées 21, 22. Celui-ci est séparé de la chambre du plasma par une enveloppe 23, soudée en 24 sur l'extrémité de la couche d'érosion 10 des profilés. Cette extrémité ne possède alors pas de rainurage longitudinal, de façon à assurer une liaison continue de tous les profilés au droit de cette soudure. La demi-coquille 21 est usinée pour former une collerette 25 de raccordement à l'extrémité du conduit 14. Cette dernière se termine par une collerette 26, reliée par une soudure 27 à la collerette 25. A l'intérieur de la tubulure formée par ces deux collerettes est disposé un manchon 28, qui est soudé respectivement au conduit du profilé et au collecteur par des cordons de soudure 29, 30. Ce manchon double la soudure externe 27 et assure ainsi un double confinement des fuites éventuelles aux soudures de raccordement.

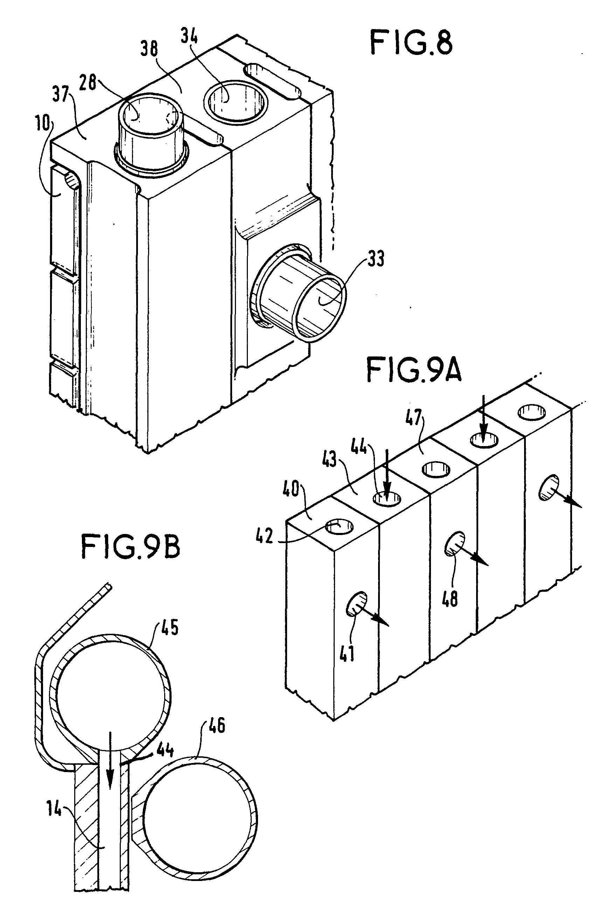

Cette figure correspond au cas où le collecteur d'amenée est disposé à une extrémité des profilés et le collecteur d'évacuation à l'autre extrémité. Mais il est aussi possible d'assurer une circulation en U de l'eau de refroidissement dans la paroi, les deux collecteurs étant rassemblés à une extrémité des profilés. Dans ce cas les pas de perforétion des collecteurs d'amenée et d'évacuation sont le double de celui des profilés. Des perforations latérales sont pratiquées dans le profilé pour le raccordement d'un des deux collecteurs, comme représenté en figures 7 et 9A. Dans la figure 7, le conduit 14 du profilé est relié au collecteur 31 par une perforation 32. Comme pour un raccordement en extrémité de conduit, des collerettes sur le conduit et sur le collecteur sont soudées en bout, et un manchon interne 33 assure un double confinement des fuites. Les trous d'extrémités non utilisés des profilés sont obturés par des bouchons tels que 34, soudés par exemple en 35 et en 36 sur la paroi interne du conduit.

La figure 8 représente en perspective l'extrémité de deux profilés adjacents, dont l'un 37 est relié en bout à l'un des collecteurs, le manchon interne 28 correspondant à celui de la figure 6 étant visible, et dont l'autre 38 est relié à l'autre collecteur par une perforation laterale, le manchon interne 33 analogue à celui de la figure 7 étant visible, et son extrémité étant obturée par le bouchon 34.

La figure 9A représente schématiquement en perspective les liaisons de quelques profilés adjacents avec les collecteurs d'amenée et d'évacuation d'eau. Le profil 40 comporte une ouverture latérale 41 de jonction au collecteur d'évacuation, son ouverture en bout 42 étant fermée par un bouchon. Le profil adjacent 43 est relié au collecteur d'amenée par son ouverture d'extrémité 44.

La figure 9B représente une coupe par le plan de symétrie du profil 43, montrant la liaison de l'ouverture d'extrémité 44 de son conduit 14 avec le collecteur d'amenée 45, cependant que le collecteur d'évacuation 46 n'est pas relié au conduit 14, mais à ceux des profilés adjacents 40, 47 (ouvertures latérales 41, 48, fig. 9A).

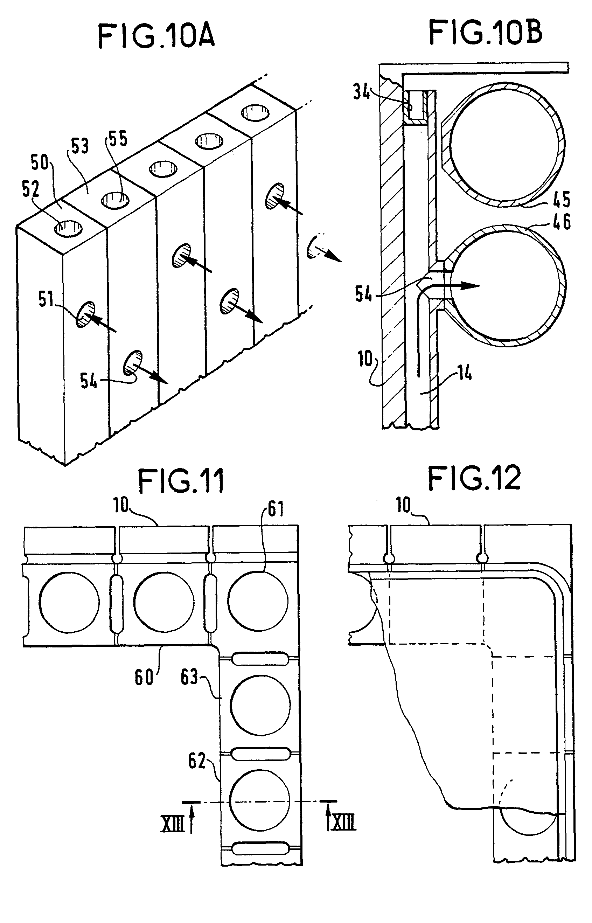

La figure 10A représente schématiquement en perspective la liaison de quelques profilés adjacents avec les collecteurs d'amenée et d'évacuation d'eau, dans le cas où la couche d'érosion est prolongée jusqu'à l'extrémité de l'enveloppe du secteur. Les deux collecteurs sont alors superposés derrière les profilés.

Tous les profilés ont alors leur extrémité 52, 55, etc... fermée par un bouchon. Le profil 50 est relié au collecteur d'amenée par son ouverture latérale 51, cependant que le profil adjacent 53 est relié au collecteur d'évacuation par son ouverture latérale 54.

La figure 10B représente une coupe par le plan de symétrie du profil 53. L'extrémité du conduit 14 du profilé est fermée par un bouchon 34. Le profilé est relié au collecteur d'évacuation 46 par son ouverture latérale 54.

Les figures 11 à 15 représentent les profilés et les collecteurs dans l'angle d'un secteur de couverture, le refroidissement devant s'effectuer non seulement sur la face du secteur opposée à la chambre à plasma, mais aussi sur une partie de la face à angle droit. Il n'est dès lors plus possible de prolonger les profilés de la face en retour jusqu'à l'arête des deux faces. On utilise alors une dérivation du profilé 60 pour l'alimentation en eau de refroidissement du profilé d'angle 61, et une dérivation du profilé 62 pour l'alimentation du profilé voisin 63 de la face à angle droit.

La figure 11 représente une vue en coupe des profilés, et la figure 12 une vue de dessus de l'angle du secteur.

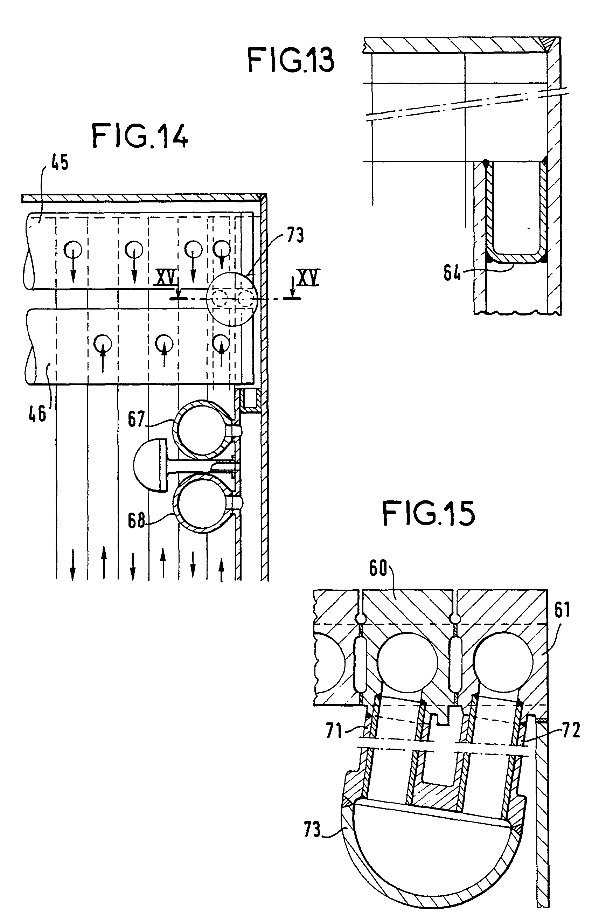

La figure 13 est une coupe selon l'axe XIII-XIII de la figure 11, montrant le bouchon 64 d'obturation de l'extrémité du conduit du profilé 62.

La figure 14 montre la disposition des collecteurs 45 et 46 pour les conduits des profilés faisant face à la chambre à plasma, 67 et 68 pour ceux des profilés disposés le long de la face à angle droit, la circulation de l'eau de refroidissement s'effectuant en U. Le profilé d'angle 61 parallèle au plan de la figure le long de l'arête du secteur est alimenté en dérivation par le profilé adjacent 60, comme représente plus clairement dans la figure 15 (coupe agrandie selon l'axe XV-XV de la figure 14), par l'intermédiaire de courts raccords 71, 72 et de la chambre hémisphérique 73.

Le profilé extrême le long de la face en retour est alimenté en dérivation par le profilé adjacent de façon analogue.

## Revendications

1. Paroi de couverture de réacteur nucléaire à fusion contrôlée dans un plasma, comprenant une couche d'érosion (10, fig. 2) en vis-à-vis de la chambre (3) contenant le plasma, une barrière d'étanchéité (13), un circuit de refroidissement à à eau sous pression et des collecteurs d'amenée et d'évacuation de l'eau de refroidissement, caractérisée en ce qu'elle est constituée par soudure côte à côte de profilés comprenant une couche d'érosion et une zone (13) percée d'un conduit (14) de section droite circulaire, et munis sur chacun de leurs côtés d'excroissances (16, 17) de forme permettant lors de l'assemblage des profilés, d'une part la formation dans la couche d'érosion de rainures longitudinales (11) à fond arrondi (12), d'autre part le soudage des profilés entre eux.

2. Paroi selon la revendication 1, caractérisée en ce que les conduits (14) sont exempts de soudure longitudinale, et ne comportant de soudures qu'à leurs extrémités, aux raccordements avec les collecteurs (45, 46, fig. 9B) d'amenée et d'évacuation de l'eau de refroidissement.

3. Paroi selon les revendications 1 ou 2, caractérisée en ce que les profilés sont en outre munis de rainures (18, fig. 3 et 5) transversales à leur longueur ou obliques par rapport à celle-ci, obtenues par usinage.

4. paroi selon l'une des revendications 1 à 3, caractérisée en ce que les extrémités des conduits des profilés sont munis de collerettes (26, fig. 6) de raccordement aux collecteurs, et en ce que ceux-ci sont constitués de deux demi-coquilles (21, 22) dont l'une (22) est munie par usinage de collerettes (25) de raccordement par soudage (27) à celles (26) des extrémités des conduits.

5. Paroi selon la revendication 4, caractérisé en ce que chaque jonction des collerettes de raccordement des extrémités des conduits et des collecteurs est doublée par un manchon interne (28, fig. 6) soudé (29, 30) sur l'une et l'autre collerette.

6. Paroi selon l'une des revendications 1 à 5, caractérisée en ce qu'elle comporte un collecteur d'amenée de l'eau de refroidissement à une extrémité, et un collecteur d'évacuation de ce fluide à l'autre extrémité, et en ce que le pas de leurs perforations de raccordement aux conduits des profilés est égal à l'écartement des profilés.

7. Paroi selon l'une des revendications 1 à 5, caractérisée en ce qu'elle comporte un collecteur d'amenée de l'eau de refroidissement et une collecteur d'évacuation de cette eau à la même extrémité, en ce que le pas de leurs perforations de raccordement aux conduits des profilés est le double de l'écartement des profilés, et en ce que les orifices des extrémités des profilés non utilisés sont obturés par des bouchons (34, fig. 7) soudés sur ces extrémités.

8. Paroi selon l'une des revendications 1 à 7, caractérisée en ce que les collecteurs d'amenée et d'évacuation de l'eau de refroidissement sont isolés de la chambre contenant le plasma par une enveloppe (23, fig. 6) soudée sur l'extrémité de la couche d'érosion, qui ne comporte pas de rainure longitudinale.

9. Paroi selon l'une des revendications 1 à 5 et 7, caractérisée en ce que les collecteurs d'amenée et d'évacuation de l'eau de refroidissement (45, 46, fig. 9B) sont disposés côte à côte derrière une extrémité des profilés.

10. Paroi selon l'une des revendications 1 à 7, caractérisée en ce que chaque profilé disposé dans un des angles de la paroi (61, fig. 15) est relié en dérivation sur un profilé adjacent (60) lui-même relié aux collecteurs d'amenée et d'évacuation de l'eau de refroidissement.

11. Procédé de fabrication d'une paroi selon la revendication 1, caractérisée en ce que l'on prépare par étirage et laminage des profilés de forme correspondant à la forme de la chambre à vide comprenant chacun une couche d'érosion (10) et une zone (13) percée d'un conduit (14) de section droite circulaire, munis sur chacun de leurs côtés d'excroissances (16, 17) permettant lors de leur assemblage, d'une part la formation dans la couche d'érosion de rainures (11) longitudinales à fond (12) arrondi, d'autre part le soudage des profilés entre eux, puis en ce que l'on effectue leur soudage côte à côte.

12. Procédé selon la revendication 11, caractérisée en ce que l'on effectue le soudage des profilés entre eux par bombardement électronique.

13. Procédé selon les revendications 11 ou 12, caractérisée en ce que l'on prépare de profilés comportant à au moins l'une de leurs extrémités des collerettes (26) de raccordement à un collecteur (20) d'amenée ou d'évacuation de l'eau de refroidissement, en ce que l'on soude ces collerettes à des collerettes (25) disposées sur des orifices des collecteurs, en ce que l'on introduit un manchon interne (28) dans chaque collerette et en ce que l'on soude ce manchon sur les collerettes, d'une part du profilé, d'autre part de l'ouverture du collecteur.

## Patentansprüche

1. Wand für einen Kernreaktor mit kontrollierter Kernfusion in einem Plasma, mit einer Erosionsschicht (10, Fig. 2) zur der Plasmakammer (3) hin, einer Abdichtungssperre (13), einem unter Druck stehenden Kühlwasserkreislauf und mit Kühlwasserein- und- austrittssammlern, dadurch gekennzeichnet, daß sie aus nebeneinander angeordneten und miteinander verschweißten Profilstäben aufgebaut ist, die eine Erosionschicht und eine von einem Kanal (14) mit Kreisquerschnitt durchzogene Zone aufweisen und die an ihren beiden Rändern mit Stegen (16, 17) einer Form ausgestattet sind, die es beim Verbinden der Profilstäbe ermöglichen, zum einen in der Erosionschicht Längsnuten (11) mit abgerundetem Boden (12) auszubilden und zum anderen die Profilstäbe miteinander zu verschweißen.

2. Wand nach Anspruch 1, dadurch gekennzeichnet, daß die Kanäle (14) nicht längsverschweißt sind und vielmehr nur an ihren Enden, nämlich bei den Anschlüssen an die Kühlwasserein- und -austrittssammlern (45, 46, Fig. 9B) verschweißt sind.

3. Wand nach Anspruch 1 oder 2, dadurch gekennzeichnet, daß die Profilstäbe weiter mit Nuten (18, Fig. 3 und 5) quer zur Länge der Profilstäbe oder schräg dazu versehen sind, wobei die Nuten durch maschinelle Bearbeitung erzeugt sind.

4. Wand nach einem der Ansprüche 1 bis 3, dadurch gekennzeichnet, daß die Enden der Kanäle der Profilstäbe mit Anschlußkragen (26, Fig. 6) an die Sammler versehen sind und daß die Sammler aus zwei Halbschalen (21, 22) bestehen, von denen eine (22) durch maschinelle Bearbeitung erzeugte Kragen (25) zum Anschließen mittels Schweißverbindung (27) an die Kragen (26) der Kanalenden aufweist.

5. Wand nach Anspruch 4, dadurch gekennzeichnet, daß jede Verbindung der Anschlußkragen der Kanalenden mit den Kragen der Sammler durch eine Innenhülse (28, Fig. 6) gedoppelt ist, die an beiden Kragen angeschweißt ist (29, 30).

6. Wand nach einem der Ansprüche 1 bis 5, dadurch gekennzeichnet, daß sie einen Kühlwassereintrittssammler an einem Ende und einen Kühlmittelaustrittssammler am anderen aufweist, und daß der Abstand der Anschlußöffnungen dieser Sammler an die Kanäle der Profilstäbe dem Abstand der Profilstäbe entspricht.

7. Wand nach einem der Ansprüche 1 bis 5, dadurch gekennzeichnet, daß sie einen Kühlwassereintrittssammler und einen Kühlwasseraustrittssammler am gleichen Ende aufweist, daß der Abstand der Anschlußöffnungen der Sammler an die Kanäle der Profilstäbe doppelt so groß ist wie die Breite der Profilstäbe, und daß die nichtbenutzten Öffnungen an den Enden der Profilstäbe durch Stopfen (34, Fig. 7) verschlossen sind, die an diesen Enden angeschweißt sind.

8. Wand nach einem der Ansprüche 1 bis 7, dadurch gekennzeichnet, daß die Kühlwasserein- und- austrittssammler gegen die Plasmakammer durch eine Abdeckung (23, Fig. 6) isoliert sind, die an das Ende der Erosionsschicht angeschweißt ist, das keine Längsnut aufweist.

9. Wand nach einem der Ansprüche 1 bis 5 und 7, dadurch gekennzeichnet, daß die Kühlwasserein- und -austrittssammler (45, 46, Fig. 9B) nebeneinander hinter einem Ende der Profilstäbe angeordnet sind.

10. Wand nach einem der Ansprüche 1 bis 7, dadurch gekennzeichnet, daß jeder in einer Ecke der Wand (61, Fig. 15) angeordnete Profilstab über eine Abzweigung mit einem benachbarten Profilstab (60) verbunden ist, der seinerseits an die Kühlwasserein- und -austrittssammler angeschlossen ist.

11. Verfahren zur Herstellung einer Wand gemäß Anspruch 1, dadurch gekennzeichnet, daß durch Ziehen und Walzen Profilstäbe entsprechend der Form der Vakuumkammer hergestellt werden, von denen jeder eine Erosionsschicht (10) und eine von einem Kanal (14) mit Kreisquerschnitt durchzogene Zone (13) umfaßt und auf jeder Längsseite Stege (16, 17) besitzt, die es gestatten, beim Verbinden einerseits Längsrillen (11) mit abgerundetem Boden (12) in der Erosionsschicht zu bilden, andererseits Profilstäbe miteinander zu verschweißen, und daß anschließend die Profilstäbe nebeneinander verschweißt werden.

12. Verfahren nach Anspruch 11, dadurch gekennzeichnet, daß das Verschweißen der Profilstäbe miteinander durch Elektronenbeschuß erfolgt.

13. Verfahren nach den Ansprüchen 11 oder 12, dadurch gekennzeichnet, daß Profilstäbe hergestellt werden, die an mindestens einem ihrer Enden Anschlußkragen (26) für einen Kühlwasserein- oder -austrittssammler (20) besitzen, und daß eine Innenhülse (28) in den Kragen eingefügt wird, die einerseits mit den Kragen des Profilstabs und andererseits dem Kragen der Sammleröffnung verschweißt wird.

## Claims

1. A wall for enclosing a plasma in a controlled fusion nuclear reactor, the wall comprising an erosion layer (10, Figure 2) facing the plasma containing chamber (3), a sealing barrier (13), a pressurized water cooling circuit, and inlet and outlet manifolds for cooling water, characterized in that it is constituted by welding bars together side-by-side, each bar including an erosion layer and a zone (13) having a duct (14) of circular right cross-section passing therethrough, and each bar having ridges (16, 17) projecting from each of its sides, said ridges being of a shape suitable, when the bars are assembled, firstly for forming longitudinal grooves (11) having rounded bottoms (12) in the erosion layer, and secondly for enabling the bars to be interconnected by welding.

2. A wall according to claim 1, characterized in that the ducts (14) are free from longitudinal welding, and are welded at their ends only, where they are connected to the cooling water inlet and outlet manifolds (45, 46, Figure 9B).

3. A wall according to claim 1 or 2, characterized in that the bars are provided, in addition, with grooves (18, Figures 3 and 5) running transversely to their lengths or obliquely relative thereto, said grooves being obtained by machining.

4. A wall according to one of claims 1 to 3, characterized in that the ends of the ducts along the bars are provided with lips (26, Figure 6) for connection to the manifolds, and that the manifolds are built up from pairs of half-shells (21, 22), one of which (22) is machined to provide lips (25) suitable for being welded (27) to the lips (26) at the ends of the ducts.

5. A wall according to claim 4, characterized in that each connection between a duct end connection lip and a manifold lip is lined by an internal sleeve (28, Figure 6) which is welded (29, 30) to both of the lips.

6. A wall according to one of claims 1 to 5, characterized in that it includes a cooling water inlet manifold at one end and an outlet manifold for said fluid at the other end, and that the holes for connecting the manifolds to the ducts of the bars are at the same pitch as the bars.

7. A wall according to one of claims 1 to 5, characterized in that it includes a cooling water inlet manifold and an outlet manifold for said water located at the same end, and that the pitch of their holes for connection to the ducts of the bars is twice the pitch of the bars, with the unused end orifices of the bars being closed by stoppers (34, Figure 7) welded to said ends.

8. A wall according to one of claims 1 to 7, characterized in that the cooling water inlet and outlet manifolds are isolated from the plasma containing chamber by a shield (23, Figure 6) welded to that end of the erosion layer which does not have longitudinal grooves.

9. A wall according to one of claims 1 to 5 and 7, characterized in that the cooling water inlet and outlet manifolds (45, 46, Figure 9B) are disposed side-by-side behind one end of the bars.

10. A wall according to one of claims 1 to 7, characterized in that each bar disposed in one of the angles of the wall (61, Figure 15) is connected by means of a shunt to an adjacent bar (60) which is in itself connected to the cooling water inlet and outlet manifolds.

11. A method of manufacturing a wall according to claim 1, characterized in that bars are prepared by drawing and rolling, thus obtaining a shape corresponding to the shape of the vacuum chamber, each bar comprising an erosion layer (10) and a zone (13) having a duct (14) of circular cross-section passing therethrough, each bar having ridges (16, 17) projecting from its sides and of a size suitable, when the bars are assembled, firstly to form longitudinal grooves (11) having rounded bottoms (12) in the erosion layer and secondly to enable the bars to be welded together, said bars then being welded together.

12. A method according to claim 11, characterized in that the bars are welded together by electron bombardment.

13. A method according to claim 11 or 12, characterized in that bars are prepared including lips (26) at the least one of their ends for connection to a cooling water inlet (20) or outlet manifold, that these lips are welded to lips (25) disposed around orifices of the manifolds, that an internal sleeve (28) is inserted inside each lip, and that the sleeve is welded to both associated lips, i.e. to the bar and to the opening of the manifold.

# FIG.1

## FIG.2

## FIG.3

## FIG.4

## FIG.5

2

# FIG.6

# FIG.7

FIG.8

FIG.9A

FIG.9B

4

# FIG.10A

# FIG.10B

# FIG.11

# FIG.12

FIG.13

FIG.14

FIG.15